**Europäisches Patentamt**

**European Patent Office**

**Office européen des brevets**

(11) Veröffentlichungsnummer: **0 232 455**
**A1**

# EUROPÄISCHE PATENTANMELDUNG

(21) Anmeldenummer: **86111034.4**

(22) Anmeldetag: **09.08.86**

(51) Int. Cl.⁴: **G 01 F 11/02, B 01 J 8/00**

(30) Priorität: **20.12.85 CH 5461/85**

(43) Veröffentlichungstag der Anmeldung: **19.08.87**
**Patentblatt 87/34**

(84) Benannte Vertragsstaaten: **AT BE CH DE FR GB IT LI NL SE**

(71) Anmelder: **CONTRAVES AG, Schaffhauserstrasse 580, CH-8052 Zürich (CH)**

(72) Erfinder: **Knaus, Peter, Dr., Oberstrasse 218, CH-9013 St. Gallen (CH)**
Erfinder: **Zemp, Georg, Friedheimstrasse 26, CH-8057 Zürich (CH)**

(54) **Vorrichtung für die dosierte Zugabe eines rieselfähigen Feststoffes.**

(57) Die Vorrichtung für die dosierte Zugabe eines rieselfähigen Feststoffes zu dem Behälter eines Laborreaktors hat einen horizontal angeordneten Dosierzylinder (7), an dessen Öffnungsrand (17) ein Schließkörper (18) durch die Rückstellkraft einer Feder (20) anliegt.

Ein sich durch den Förderdruck eines Kolbens (8) öffnender Austrittsspalt (A) ist über einem Zugabestutzen (3) angeordnet. Das Ausrieseln des Feststoffes (30) durch den Austrittsspalt (A) wird durch ein in Spaltnähe angeordnetes, rotierend angetriebenes Rührorgan (28) unterstützt, so daß auch schwer rieselnde Feststoffe genau dosierbar sind.

## Vorrichtung für die dosierte Zugabe eines rieselfähigen Feststoffes

Die Erfindung betrifft eine Vorrichtung für die dosierte Zugabe eines rieselfähigen Feststoffes zu einem Reaktionsbehälter mit einem einen Kolben einschliessenden Dosierzylinder, an den sich ein entsprechend zugeordneter Zugabestutzen anschliesst.

Die genaue Dosierung von gut rieselfähigen Feststoffen bereitet bei den bekannten Vorrichtungen der genannten Art keine grundsätzlichen Schwierigkeiten, da in diesem Fall die durch das Förderorgan zu einer Austrittsöffnung des Dosierzylinders geförderte Menge an Feststoff regelmässig bzw. ohne Verzögerung in den Zugabestutzen rieseln kann. Andere riesel- oder schüttfähige Feststoffe neigen jedoch mehr oder weniger stark zur Propfen- oder Klumpenbildung, besonders wenn sie durch die Dosierförderung dem Förderdruck ausgesetzt sind oder durch eine Austrittsöffnung mit im Vergleich zum Förderquerschnitt verkleinertem Querschnitt ausrieseln sollen. Ein Beispiel für einen klumpenbildenden Feststoff gibt Puderzucker, Mehl o.dgl.

Der Erfindung liegt die Aufgabe zugrunde, eine Vorrichtung der eingangsgenannten Art zu finden, die bei einfachem und kompaktem Aufbau eine genaue Dosierung auch von schlecht rieselnden, bzw. zur Klumpenbildung neigenden Feststoffen ermöglicht, so dass sie die Nachteile bekannter Vorrichtungen vermeidet.

Die Aufgabe wird dadurch gelöst, dass der Dosierzylinder im wesentlichen quer zur Achse des Zugabestutzens angeordnet und durch ein gegen die Rückstellkraft einer

0232455

- 2 -

Feder am Oeffnungsrand des Dosierzylinders anliegendes Element verschliessbar ist, und dass an einer dem Kolben zugewandten Fläche des Elements ein rotierend antreibbares Rührorgan angeordnet und gelagert ist.

Im folgenden wird die Erfindung anhand eines in der Zeichnung dargestellten Ausführungsbeispieles näher erläutert.
Es zeigt:
Fig.1 eine vereinfachte Darstelltung der Vorrichtung in Schnittansicht, und
Fig.2 ein schematisch dargestelltes Rührorgan.

Ein mit 1 bezeichnetes Gehäuse der Vorrichtung ist im wesentlichen T-förmig ausgebildet und umfasst drei ineinander übergehende und im Winkel von jeweils 90° zueinander angeordnete Anschlussstutzen 2,3 und 4. Der zwischen den beiden gleichachsigen Stutzen 2 und 4 im rechten Winkel dazu angeordnete Stutzen 3 ist als Zugabestutzen ausgebildet und mit einem Anschlusskonus 5 für die Verbindung mit einem Aufsatzteil 6 eines nicht näher dargestellten Behälters für die Durchführung chemischer Reaktionen in einem Laborreaktor versehen.

Der Stutzen 2 dient der Aufnahme und dem Anschluss eines Dosierzylinders 7, in dem ein Kolben 8, durch einen teilweise und schematisch dargestellten Dosierantrieb 9 angetrieben, längs verschiebbar geführt ist. Der Dosierzylinder 7 ist in einer Anschlusshülse 10 gehalten, welche mit einem Flansch 11 durch ein Klemmelement 12 an einem Flansch 13 des Stutzens 2 lösbar befestigt ist. Ein endseitiger Deckel 14 an der Anschlusshülse 10 trägt den schematisch angedeuteten Dosierantrieb 9, der einen weg-gesteuerten, nicht dargestellten Motor hat.

Dieser Motor kann ein Elektromotor mit einer Wegmesseinrichtung oder ein Schrittmotor sein. Der Dosierantrieb 9
kann jedoch auch einen weg-gesteuerten Hydraulik- oder
Pneumatikzylinder aufweisen.

Das eine, eine Austrittsöffnung 17' aufweisende Ende des
Dosierzylinders 7 reicht bis zur Mitte des Gehäuseinnenraumes bzw. bis zur Mitte des Zugabestutzens 3, so dass
die als Achse 16 bezeichnete Mitte des Zugabestutzens 3
mit der Ebene des Oeffnungsrandes 17 des Dosierzylinders
7 fluchtend verläuft. Ein durch den Vorschub des Kolbens
8 von dem Dosierzylinder 7 abgegebener Feststoff 30
rieselt somit zentral in den Zugabestutzen 3 und Aufsatzteil 6 und somit in den nicht dargestellten Reaktorbehälter.

Die Austrittsöffnung 17' des Dosierzylinders 7 ist bei
abgeschaltetem Dosierantrieb 9 durch einen zugeordneten
Schliesskörper 18 verschlossen, der mit einer dem Dosierzylinder 7 zugewandten ebenen Fläche 19 an dem Oeffnungsrand 17 des Dosierzylinders 7 durch die Rückstellkraft einer Schraubenfeder 20 anliegt. Die Schraubefeder
20 stützt sich an einem in den Stutzen 4 eingesetzten
Verschlusskörper 22 ab, wobei dieser mit einem Flansch
23 an einem Abschlussflansch 24 des Stutzens 4 durch ein
lösbares Klemmelement 25 gehalten ist. Der Verschlusskörper 22 dient auch zur Führung eines an den Schliesskörper 18 angeformten Schaftes 26, durch den hindurch
sich eine Antriebswelle 27 für ein mit Armen 29 versehenes und von einem schematisch dargestellten Drehantrieb
32 angetriebenes Rührorgan 28 erstreckt. Das Rührorgan
28 ist mit nicht näher dargestellten Mitteln mit der
Antriebswelle 27 wirkverbunden.

Das Rührorgan 28 ist in zusammengebautem Zustand in der Austrittsöffnung 17' des Dosierzylinders 7 angeordnet und befindet sich somit unmittelbar im Bereich des Schliesskörpers 18, so dass die Arme 29 sich im wesentlichen parallel zu der die Austrittsöffnung 17' verschliessenden ebenen Fläche 19 bewegen. Durch diese Anordnung des Rührorganes 28 wird der Feststoff 30 während seines Ausschubs aus dem Dosierzylinder 7 und vor dem Austreten aus einen zwischen dem Oeffnungsrand 17 und dem Schliesskörper 18 durch den Druck des Kolbens 8 entstehenden Austrittsspalt A der Rührwirkung des Rührorgans 28 ausgesetzt, so dass ein propfen- bzw. klumpenförmiger Austritt verhindert und damit eine relativ exakte Dosierung gewährleistet ist. Der in der Grössenordnung von 1-2mm entstehende Austrittsspalt A öffnet sich gegen die Rückstellkraft der Schraubenfeder 20 durch den Vorschub des Kolbens 8, der den im Dosierzylinder 7 eingeschlossenen Feststoff 30 in Pfeilrichtung X vor sich herschiebt.

Beim vollständigen Entleeren des Dosierzylinders 7 drückt der Kolben 8 auf ein über das Rührorgan 28 überstehendes Ende 33 der Antriebswelle 27, so dass das Rührorgan 28 aus dem Dosierzylinder 7 herausgeschoben wird und der Kolben 8 mit seiner Vorderseite über den Oeffnungsrand 17 aus der Austrittsöffnung 17' hinaustreten kann.

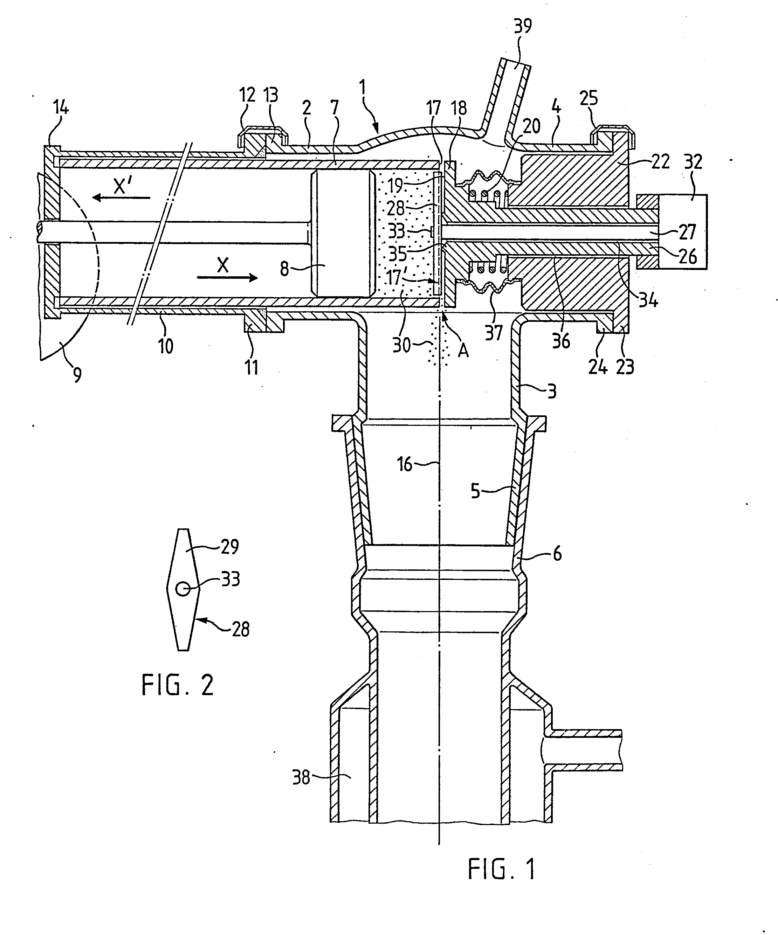

Es versteht sich, dass das in Fig.2 dargestellte Rührorgan 28 verschiedenartig ausgeführt sein kann, z.B. mit nur einem oder auch mehr als zwei Rührarmen 29, die messerartig über die Verschlussfläche 19 des Schliesskörpers 18 streichen. Ein Eindringen von Feststoff-Partikeln in eine für die Welle 27 in den Teilen 18,26 vorgesehene Durchgangsbohrung 34 wird durch einen unmittelbar hinter dem Rührorgan 28 angeordneten und am Schliesskörper 18 angeformten Gleitring 35 verhindert. Weiterhin wird ein Eindringen von Feststoff bzw. von Staubpartikeln in die für den Schaft 26 des Schliesskörpers 18 als Führung vorgesehene Bohrung 36 durch einen Faltenbalg 37 verhindert, welcher im wesentlichen den Spalt zwischen dem Schliesskörper 18 und dem Verschlusskörper 22 überbrückt und dabei die Schraubenfeder 20 umschliesst.

Das Gehäuse 1 der Vorrichtung sowie der Dosierzylinder 7 wie auch die übrigen mit dem Feststoff 30 in Kontakt gelangenden Teile können aus Glas bestehen oder aus einem anderen korrosionsbeständigen und leicht zu reinigenden Material, wie PTFE oder einer geeigneten Metalllegierung.

Ein am Aufsatzteil 6 vorgesehener Kühlmantel 38 verhindert das Aufsteigen von Dämpfen aus dem Reaktor. Ausserdem kann durch Zuführen eines Inertgases durch einen am Gehäuse 1 angeformten Stutzen 39 ein Dampfkontakt mit dem Feststoff 30 verhindert werden.

Zum Füllen bzw. Laden des Dosierzylinders 7 wird der Kolben 8 in Pfeilrichtung X' vollständig zurückbewegt und danach, nach Lösen des Teils 25 der Verschlusskörper 22 zusammen mit dem Schliesskörper 18 und dem Rührorgan 28 einschliesslich dem Antrieb 32 vom Gehäuse 1 entfernt. Die Teile 28,18,22,27 und 32 bilden dabei eine Baueinheit. Bei vertikal gestelltem Dosierzylinder 7 wird dieser mit dem Feststoff 30 gefüllt. Dabei wird die Vorrichtung zuvor von dem Aufsatzteil 6 gelöst.

Nach dem Füllen wird die aus den Teilen 28,18,22,27 und 32 gebildete Baueinheit wieder in das Gehäuse 1 eingesetzt und mit dem Teil 25 wieder befestigt. Danach wird der Kolben 8 in vertikaler Lage des Dosierzylinders 7 nach oben geschoben, bis der Raum zwischen dem Kolben 8 und der Fläche 19 des Schliesskörpers 18 vollständig mit Feststoff 30 gefüllt und die Luft verdrängt worden ist. Abschliessend wird die Vorrichtung in horizontaler Lage des Dosierzylinders 7 wieder auf das Aufsatzteil 6 aufgesetzt, so dass die Dosierung durch entsprechende Steuerung des Dosierantriebs 9 beginnen kann.

Patentansprüche:

1. Vorrichtung für die dosierte Zugabe eines rieselfähigen Feststoffes zu einem Reaktionsbehälter, mit einem einen Kolben (8) einschliessenden Dosierzylinder (7), an den sich ein entsprechend zugeordneter Zugabestutzen (3) anschliesst, dadurch gekennzeichnet, dass der Dosierzylinder (7) im wesentlichen quer zur Achse (16) des Zugabestutzens (3) angeordnet und durch ein gegen die Rückstellkraft einer Feder (20) ám Oeffnungsrand (17) des Dosierzylinders (7) anliegendes Element (8) verschliessbar ist, und dass an einer dem Kolben (8) zugewandten Fläche des als Schliesskörper ausgebildeten Elements (18) ein rotierend antreibbares Rührorgan (28) angeordnet und gelagert ist.

2. Vorrichtung nach Anspruch 1, dadurch gekennzeichnet, dass das Rührorgan (28) mit einer mit einem Antrieb (32) wirkverbundenen Antriebswelle (27) in dem Schliesskörper (18) gleichachsig mit dessen Achse gelagert ist, und dass das Rührorgan (28) mindestens einen Rührarm (29) aufweist, der sich in radialer Richtung von der Antriebswelle (27) mit geringem Abstand bis zu der Innenwand des Dosierzylinders (7) erstreckt.

3. Vorrichtung nach Anspruch 1 oder 2, dadurch gekennzeichnet, dass der Schliesskörper (18) einen angeformten Schaft (26) aufweist, der in einem am Gehäuse (1) der Vorrichtung lösbar befestigten Verschlusskörper (22) gelagert ist, und dass der Schliesskörper (18), das Rührorgan (28) zusammen mit dem Verschlusskörper (22) eine Baueinheit bilden, welche zum Füllen des Dosierzylinders (7) aus dem Gehäuse (1) entfernbar ist.

4. Vorrichtung nach einem der Ansprüche 1 bis 3, dadurch gekennzeichnet, dass das Gehäuse (1) der Vorrichtung im wesentlichen durch drei T-förmig angeordnete Anschlussstutzen (2,3,4) gebildet ist, wobei die gleichachsig verlaufenden Stutzen (2,4) zur Aufnahme des Dosierzylinders (7) und des Verschlusskörpers (22) ausgebildet sind.

5. Vorrichtung nach einem der Ansprüche 1 bis 4, dadurch gekennzeichnet, dass das Rührorgan (28) eine dem Kolben (8) zugekehrte Erhebung (33) aufweist, die als Anschlag für den Kolben (8) dient, so dass das Rührorgan (28) und der Schliesskörper (18) durch den Kolben (8) gegen die Rückstellkraft einer Feder (20) axial verstellbar ist.

6. Vorrichtung nach einem der Ansprüche 1 bis 5, dadurch gekennzeichnet, dass das Gehäuse (1) der Vorrichtung und der Dosierzylinder (7) aus Glas oder einem andern korrosionsbeständigen und leicht zu reinigendem Material bestehen.

7. Vorrichtung nach einem der Ansprüche 1 bis 6, dadurch gekennzeichnet, dass der Kolben (8) durch ein entsprechend zugeordnetes, erstes Antriebsorgan (9) betätigt und das Rührorgan (28) von einem zweiten Antriebsorgan (32) rotierend angetrieben wird.

0232455

FIG. 2

FIG. 1

Europäisches
Patentamt

**EUROPÄISCHER RECHERCHENBERICHT**

0232455
Nummer der Anmeldung

EP 86 11 1034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 425 546 (CHARBONNAGES DE FRANCE) <br> * Figuren * | 1,2,7 | G 01 F 11/02 <br> B 01 J 8/00 |
| A | DE-B-1 252 839 (H. KOPPERS GmbH) <br> * Figur; Spalte 1, Zeilen 11-26 * | 1,2,7 | |
| A | DE-C-3 317 608 (AKA-PRÄZISIONSDOSIERPUMPEN GmbH) <br> * Figur * | 1 | |
| A | DE-B-1 249 224 (INVENTA AG) <br> * Figur * | 1 | |
| A | US-A-3 028 226 (WENDELL et al.) <br> * Figuren * | 1 | |

RECHERCHIERTE SACHGEBIETE (Int. Cl.4)

G 01 F
B 01 J
B 65 B
B 65 G
G 01 N

Der vorliegende Recherchenbericht wurde für alle Patentansprüche erstellt.

| Recherchenort | Abschlußdatum der Recherche | Prüfer |
|---|---|---|
| DEN HAAG | 08-04-1987 | NUIJTEN E.M. |